# EUROPÄISCHE PATENTSCHRIFT

(11) **EP 2 129 985 B1**
(45) Veröffentlichungstag und Bekanntmachung des Hinweises auf die Patenterteilung: **29.08.2012**
(21) Anmeldenummer: 07820302.3
(22) Anmeldetag: 18.09.2007
(51) Int. Cl.: F27B 13/02

(54) **VERFAHREN UND VORRICHTUNG ZUR WÄRMERÜCKGEWINNUNG**
METHOD AND DEVICE FOR HEAT RECOVERY
PROCÉDÉ ET DISPOSITIF DE RÉCUPÉRATION DE CHALEUR

(43) Veröffentlichungstag der Anmeldung: 09.12.2009
(73) Patentinhaber: Innovatherm Prof. Dr. Leisenberg GmbH + Co. KG, 35510 Butzbach (DE)
(72) Erfinder: LEISENBERG, Wolfgang, 61231 Bad Nauheim/Steinfurth (DE)
(74) Vertreter: Tappe, Hartmut
(86) Internationale Anmeldenummer: PCT/EP2007/059849
(87) Internationale Veröffentlichungsnummer: WO 2009/036799

(56) Entgegenhaltungen:
- EP-A- 1 785 685
- DE-A1- 3 538 151
- DE-T2- 69 906 296
- US-A- 3 822 190
- US-A- 4 253 823
- US-A- 4 569 835

## Beschreibung

Die Erfindung betrifft ein Verfahren zur Wärmerückgewinnung bei der Herstellung von Anoden in einem Anoden-Ringofen, umfassend zumindest eine Ofeneinheit mit einer Aufheizzone, einer Feuerzone und einer Kühlzone mit jeweils einer Mehrzahl von mit Heizkanälen untereinander verbundenen Kammern, die als Wärmetauscher ausgebildet sind und zur Aufnahme der Anoden dienen, bei dem zum Betrieb der Aufheizzone vermittels einer ersten Absaugeinrichtung eine erste Teilmenge der in der Kühlzone durch die Abwärme der Anoden gebildeten Heißluft in die Aufheizzone geleitet wird und vermittels einer zweiten Absaugeinrichtung eine zweite Teilmenge der in der Kühlzone gebildeten Heißluft zu einem vom Anoden-Ringofen unabhängig ausgebildeten weiteren Wärmetauscher geleitet wird. Des Weiteren betrifft die Erfindung eine Vorrichtung zur Durchführung des vorgenannten Verfahrens.

Das vorliegende Verfahren findet Anwendung bei der Herstellung von Anoden, die für die Schmelzflusselektrolyse zur Herstellung von Primäraluminium benötigt werden. Diese Anoden werden aus Petrolkoks unter Zusatz von Pech als Bindemittel in einem Formungsverfahren als so genannte "grüne Anoden" oder "Rohanoden" hergestellt, die nachfolgend dem Formungsverfahren in einem Anoden-Ringofen gesintert werden. Dieser Sintervorgang findet in einem definiert ablaufenden Wärmebehandlungsprozess statt, bei dem die Anoden drei Phasen, nämlich eine Aufheizphase, eine Sinterphase und eine Abkühlphase, durchlaufen. Dabei befinden sich die Rohanoden in der Aufheizzone eines aus der Aufheizzone, der Feuerzone und der Kühlzone zusammengesetzten, umlaufend am Anoden-Ringofen ausgebildeten "Feuers" und werden durch die aus der Kühlzone stammende Abwärme von bereits fertig gesinterten Anoden vorgeheizt, bevor die vorgeheizten Anoden in der Brenn- oder Feuerzone auf die Sintertemperatur von etwa 1050 °C aufgeheizt werden. Entsprechend dem Stand der Technik, wie er beispielsweise aus der EP 1 785 685 A1 bekannt ist, werden dabei die verschiedenen, vorgenannten Zonen durch eine wechselnd umlaufende Anordnung unterschiedlicher Aggregate oberhalb von Ofenkammern definiert, die die Anoden aufnehmen und als Wärrmtauscher fungieren. Durch die Positionierung der Brennereinrichtung oberhalb der ausgewählten Ofenkammern ist die Brenner- oder Feuerzone definiert, die zwischen der Aufheizzone und der Kühlzone angeordnet ist. In der Kühlzone befinden sich unmittelbar zuvor gebrannte, also auf Sintertemperatur aufgeheizte, fertiggestellte Anoden. Oberhalb der Kühlzone ist eine Gebläseeinrichtung angeordnet, vermittels der Luft in die Kammern der Kühlzone eingegeben wird, welche durch eine oberhalb der Aufheizzone angeordnete Absaugeinrichtung durch die Kammern untereinander verbindende Heizkanäle von der Kühlzone durch die Feuerzone hindurch in die Aufheizzone und von dieser als Rauchgas durch eine Rauchgasreinigungsanlage geleitet und in die Umgebung abgegeben wird.

In der EP 1 785 685 A1 wird vorgeschlagen, die vermittels der Absaugeinrichtung der Aufheizzone entnommene Rauchgasmenge, die immer noch eine Temperatur zwischen 150 °C und 250 °C aufweist, einem Wärmetauscher zuzuführen, der vor Formung der "grünen Anoden" in einem Misch- und Formaggregat eine Erwärmung des Petrolkoks auf ca. 150 °C ermöglichen soll, um eine Verbesserung der Benetzbarkeit mit flüssigem Pech in dem nachfolgenden Mischvorgang zu gewährleisten. Als Wärmetauscher zur Erwärmung des Petrolkoks wird ein Fließ- oder Wanderbett-Wärmetauscher vorgeschlagen, der zur Erzielung der gewünschten Petrolkoks-Temperatur eine Temperatur des Rauchgases von 250 °C aufweisen muss und den bislang in konventionellen Anlagen zum Einsatz kommenden, als "Vorwärmschnecke" ausgebildeten Wärmetauscher ersetzen soll, der mit einem Wärmeträgeröl als Wärmeträgermedium mit einer Temperatur von ca. 300 °C betrieben wird.

Die Anwendung des aus der EP 1 785 685 A1 bekannten Verfahrens ist demnach bei bestehenden Anlagen nicht möglich. Vielmehr setzt die Anwendung des Verfahrens eine wesentliche Änderung der Anlagentechnik zur Rohanodenherstellung voraus. Diese Änderung der Anlagentechnik umfasst nicht nur den Austausch der bekannten Vorwärmschnecke gegen den vorgenannten Fließ- oder Wanderbett-Wärmetauscher sondern auch eine Rauchgasabführung aus der Aufheizzone durch die Rohanodenherstellung, da für den Fall, dass die Temperatur des Rauchgases zum Betrieb des Wärmetauschers nicht ausreicht, vorgesehen ist, aus der Abkühlzone des Anoden-Ringofens durch eine Absaugeinrichtung Heißluft abzusaugen und mit dem Rauchgas zu vermischen. Diese Kombination von zwei Volumenströmen mit unterschiedlichen Temperaturen zur Erzielung der gewünschten Temperatur des Wärmeträgermediums des Wärmetauschers setzt eine entsprechend komplexe Regelung mit entsprechender Anlagentechnik voraus.

Aufgabe der vorliegenden Erfindung ist es daher, ein Verfahren bzw. eine Vorrichtung vorzuschlagen, das bzw. die eine Nutzung im Betrieb eines Anoden-Ringofens freiwerdenden Abwärme zur Rohanodenherstellung bei weitestgehender Beibehaltung bestehender Anlagentechnik ermöglicht.

Diese Aufgabe wird durch ein Verfahren mit den Merkmalen des Anspruchs 1 bzw. eine Vorrichtung mit den Merkmalen des Anspruchs 9 gelöst.

Bei dem erfindungsgemäßen Verfahren erfolgt die Aufheizung des zum Betrieb des vom Anoden-Ringofen unabhängig ausgebildeten Wärmetauschers primär über die der Kühlzone entnommenen Heißluft.

Der Erfindung liegt die Erkenntnis zugrunde, dass lediglich ein Teil der zur Kühlung von Ofenkammern und Anoden in die Kühlzone eingeblasenen Kaltluft, die in der Kühlzone auf ca. 950 °C aufgeheizt wird, als vorgewärmte Verbrennungsluft für die Feuerzone benötigt wird. Der Rest der Kühlwärme wird bislang über Abluftöffnungen in der Kühlzone an die Umgebung, also die Ofenhalle, abgegeben. Gemäß der Erfindung wird nun die in der Abluft enthaltene Wärmeenergie zum Betrieb eines vom eigentlichen Anoden-Ringofen unabhängigen Wärmetauschers genutzt, der im vorliegenden Anwendungsfall zur Erwärmung des Petrolkokses im Rahmen der Rohanodenherstellung dient.

Eine entsprechende Wärmebilanz macht deutlich, dass die bislang als Abwärme in die Umgebung aus der Kühlzone abgegebene Wärmemenge ausreichend ist, um die für den Betrieb eines als Vorwärmschnecke ausgebildeten Wärmetauschers notwendige Temperatur des Wärmeträgermediums sicherzustellen. Da die zum Betrieb der Wärmeschnecke notwendige Temperatur des als Wärmeträgermediums verwendeten Wärmeträgeröls 300 °C beträgt um die in der Kühlzone freiwerdende, für die Vorwärmung der Anoden in der Feuerzone nicht benötigte Wärmeenergie in jedem Fall ausreichend ist, um eine ausreichende Heißluftmenge mit der zur Temperierung des Wärmeträgeröls notwendigen Mindesttemperatur von etwa 400 °C zu gewinnen, ermöglicht das erfindungsgemäße Verfahren nicht nur weiterhin den Betrieb eines als Wärmeschnecke ausgebildeten Wärmetauschers, sondern darüber hinaus auch den Ersatz des bislang zum Einsatz kommenden, im Betrieb aufwendigen, mit Öl oder Gas betriebenen Heizkessels zur Temperierung des Wärmeträgeröls.

Darüber hinaus wird durch die Nutzung der Kühlwärme in einem bisher nicht bekannten Ausmaß die bislang unvermeidbare und unerwünschte Aufheizung der Ofenhalle weitestgehend verhindert.

In jedem Fall ermöglicht es das erfindungsgemäße Verfahren, auf die Verwendung des aus der Aufheizzone abgeführten Rauchgases zum Betrieb des für die Erwärmung des Petrolkoks verwendeten Wärmetauschers zu verzichten und statt dessen die Temperierung des Wärmetauschers unter weitestgehender Beibehaltung der bestehenden Anlagentechnik vermittels der unmittelbar aus der Kühlzone entnommenen und im Gegensatz zum schadstoffhaltigen Rauchgas nicht kontaminierten Heißluft durchzuführen.

Wenn bei einer Mehrzahl von hintereinander liegenden Ofenkammern der Kühlzone ein Temperaturgradient zur Feuerzone hin besteht, ist es möglich, durch die Auswahl der geeigneten Ofenkammer(n) für die Positionierung der Absaugeinrichtung die Temperatur der aus der Kühlzone entnommenen Heißluftmenge zu beeinflussen.

Da die Heißlufttemperatur nach dem Verlassen des Wärmetauschers für den Betrieb einer Heizschnecke noch immer mehr als 300 °C beträgt, ist es vorteilhaft, diese Heißluft einen oder mehrere weitere Wärmetauscher durchlaufen zu lassen, um gegebenenfalls damit weiteren Wärmebedarf in einer Anodenfabrik zu decken.

Wenn in Abhängigkeit von der für den oder weitere Wärmetauscher benötigten Temperatur die Heißlufttemperatur oder der Volumenstrom zu groß ist, ist es möglich, eine Teilmenge der in den Wärmetauscher eingeleiteten Wärmetauscherströmung am Wärmetauscher vorbei in einen Bypass zu leiten. So ist es möglich, die Größe der dem Wärmetauscher zugeführten Wärmemenge zu beeinflussen.

Insbesondere um neben einer Vorwärmung des Petrolkokses eine Vorwärmung des dem Petrolkoks zuzumischenden Pechs bzw. der am Mischvorgang beteiligten Aggregate durchführen zu können, kann es sich als vorteilhaft erweisen, die aus dem Wärmetauscher abgeführte Wärmeströmung und/oder die Bypass-Strömung einem oder mehreren weiteren Wärmetauscher zuzuführen.

Weiterhin kann es sich zur Einstellung der gewünschten Temperatur der dem Wärmetauscher zugeführten Wärmeströmung als vorteilhaft erweisen, wenn die der Kühlzone entnommene zweite Teilmenge mit Umgebungsluft oder Frischluft versetzt wird. Ebenfalls zur Beeinflussung der Temperatur der Wärmeströmung ist es vorteilhaft, wenn die der Kühlzone entnommene zweite Teilmenge vor dem Eintritt in oder nach dem Eintritt aus dem weiteren Wärmetauscher vermittels einer Beheizungseinrichtung aufgeheizt wird.

Dies kann besonders vorteilhaft beim Anfahren der Anlage zur Rohanodenherstellung zum Einsatz kommen, wenn noch keine Heißluft aus dem Anoden-Ringofen verfügbar ist, oder auch dann, wenn zeitweise oder dauerhaft nicht genügend Wärme zur Verfügung steht, um den Petrolkoks aufzuwärmen.

Um zu gewährleisten, dass die gesamte nutzbare Abwärme oder Kühlwärme aus der Kühlzone abgeführt wird, kann es sich als vorteilhaft erweisen, wenn die aus der Aufheizzone, der Feuerzone und der Kühlzone zusammengesetzte Ofeneinheit ( "Feuer") strömungstechnisch abgeschlossen gegenüber weiteren Ofeneinheiten betrieben wird.

Eine weitere vorteilhafte Möglichkeit zur Beeinflussung der aus der Kühlzone abgeführten Wärmemenge besteht darin, die durch die Absaugeinrichtung der Kühlzone entnommene Teilmenge für jeden Heizkanal individuell einzustellen.

Bei der erfindungsgemäßen Vorrichtung nach Anspruch 10 ist in der Kühlzone eine Absaugeinrichtung angeordnet, die über eine Entnahmeleitung mit einem unabhängig vom Anoden-Ringofen ausgebildeten weiteren Wärmetauscher unmittelbar verbunden ist.

Dieser "direkte" Anschluss der Absaugeinrichtung an den Wärmetauscher ermöglicht eine Zuführung von Wärmeenergie zum Wärmetauscher, die ausschließlich aus der Kühlzone des Anoden-Ringofens stammt.

Die weiteren Unteransprüche beziehen sich auf besonders vorteilhafte Ausführungen der Vorrichtung, deren Vorteile sich bereits aus den hierdurch ermöglichten, vorstehend erörterten Varianten der Verfahrensdurchführung ergeben.

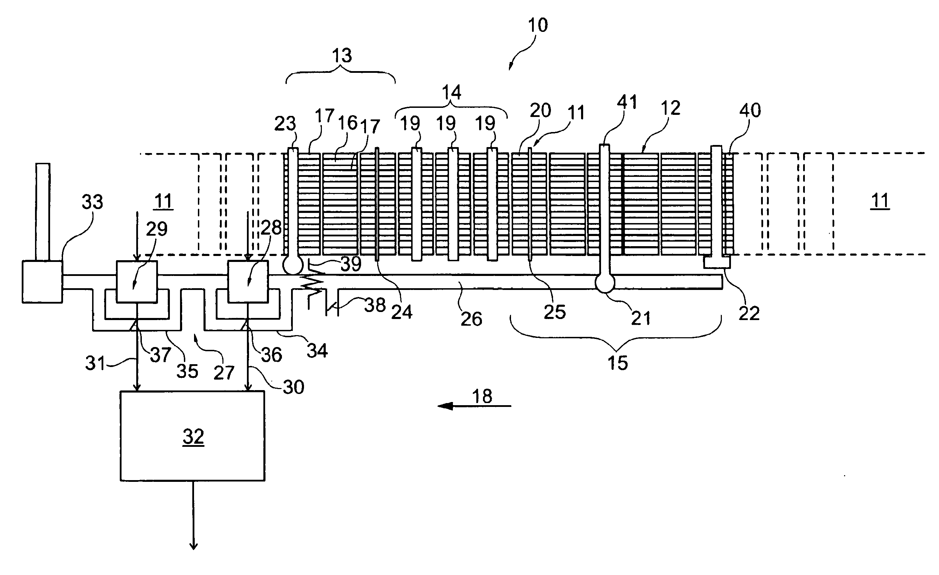

Nachfolgend wird eine bevorzugte Ausführungsform der Vorrichtung unter Erläuterung des durchführbaren Verfahrens anhand der Zeichnung näher dargestellt.

In der Zeichnungsfigur ist ein Anoden-Ringofen 10 dargestellt, der regelmäßig aus einer Mehrzahl von Ofeneinheiten 11 besteht. Jede Ofeneinheit 11 weist im vorliegenden Ausführungsbeispiel 12 Ofenkammern 12 auf, die in unterschiedlicher Anzahl zu einer Aufheizzone 13, einer Feuerzone 14 und einer Kühlzone 15 zusammengefasst sind.

Die Ofeneinheiten 11 sind jeweils identisch aufgebaut und weisen Gruben 16 auf, die jeweils beidseitig in Längsrichtung der Ofeneinheit 11 gesehen von Heizkanälen 17 begrenzt sind. Die Gruben 16 dienen zur Aufnahme von Anoden, die senkrecht zur Zeichenebene verlaufen und in Reihe in den Gruben 16 aufgenommen sind. Die Heizkanäle 17 der Ofenkammern 12 sind in Längsrichtung der Ofeneinheit 11 strömungstechnisch untereinander verbunden.

Oberhalb der Ofenkammern 12 befindet sich eine Anzahl unterschiedlicher Einrichtungen, die in ihrer Positionierung gegenüber den Ofenkammern 12 in Umlaufrichtung 18 veränderbar sind und - wie nachfolgend erläutert wird - durch ihre jeweilige Zuordnung die Lage der Aufheizzone 13, Feuerzone 14 und Kühlzone 15 definieren, die zusammen mit den Einrichtungen in Umlaufrichtung 18 vorbewegt werden.

In der in der Zeichnungsfigur dargestellten Konfiguration ist die Ofeneinheit 11 in der Feuerzone 14 mit drei Brennereinrichtungen 19 versehen, die auch als so genannte "Feuer" bezeichnet werden. Die Brennereinrichtungen 19 sind jeweils einer Ofenkammer 12 zugeordnet, deren Gruben 16 mit Rohanoden bestückt sind, die vermittels der durch die Brennereinrichtungen 19 erfolgenden Temperaturbeaufschlagung auf ca. 1050 °C aufgeheizt und zur Herstellung von zur Schmelzflusselektrolyse verwendbaren Anoden gesintert werden. Dabei werden die Anoden nicht unmittelbar über die Brennereinrichtungen 19 mit Temperatur beaufschlagt, sondern es erfolgt eine Wärmeübertragung von der in den Heizkanälen 17 geführten Luft über Heizkanalwandungen 20 auf die in den Gruben 16 angeordneten Anoden. Die Ofenkammern 12 fungieren demnach als Wärmetauscher.

In der Zeichnungsfigur rechts von der Feuerzone 14 befindet sich die Kühlzone 15, die im vorliegenden Fall sechs Ofenkammern 12 umfasst, in denen in zwei vorhergehenden Brennphasen, in denen sich die Brennereinrichtungen 19 in entsprechender Positionierung befanden, unter Hochtemperaturbeaufschlagung die Rohanoden gesintert worden sind. Über einer mittleren Ofenkammer 12 der Kühlzone 15 befindet sich in der in der Zeichnungsfigur dargestellten Konfiguration eine Absaugeinrichtung 21. Rechts von der Absaugeinrichtung 21 und noch innerhalb der Abkühlzone 15 befindet sich eine Gebläseeinrichtung 22, vermittels der die Heizkanäle 17 mit Frisch- bzw. Umgebungsluft beaufschlagbar sind.

Links von der Feuerzone 14 ist in der Aufheizzone 13 eine weitere Absaugeinrichtung 23 für die Rauchgase oberhalb der Ofenkammern 12 angeordnet, in denen sich noch nicht durch die Brennereinrichtungen 19 mit Hochtemperatur beaufschlagte, ungesinterte Rohanoden befinden.

Weiterhin ist der Zeichnungsfigur zu entnehmen, dass in der Aufheizzone 13 eine Messeinrichtung 24 angeordnet ist, die zur Steuerung bzw. Regelung des im Anoden-Ringofen ablaufenden Prozesses hier nicht näher dargestellte Sensoren zur Erfassung von Druck und Temperatur in der Aufheizzone 13 aufweist. Eine weitere Messeinrichtung 26 befindet sich in der Kühlzone 15 unmittelbar hinter der Feuerzone 14 und dient zur Erfassung des Heizkanaldrucks hinter der Feuerzone 14.

Im Betrieb des Anoden-Ringofens 10, bei dem die Anoden in der Feuerzone 14 mit Hochtemperatur beaufschlagt werden, erfolgt gleichzeitig eine Abgabe der in den Anoden gespeicherten Wärmemenge, die in der Abkühlzone 15 angeordnet sind und zuvor von den Brennereinrichtungen 19 mit Hochtemperatur beaufschlagt wurden. Die entsprechende Abwärme wird unter Zuführung von Frischluft durch die Gebläseeinrichtung 22 vermittels der in der Aufheizzone 13 angeordneten Absaugeinrichtung 23 bis in die Aufheizzone 13 geführt und dient dort zur Vorwärmung der Anoden, bevor diese nachfolgend mit den Brennereinrichtungen 19 beaufschlagt werden. Durch geeignete Drossel- und Regeleinrichtungen wird dabei die Funktion der Gebläseeinrichtung 22 und der Absaugeinrichtung 23 so aufeinander abgestimmt, dass sich in den zwischen den Gruben 16 verlaufenden Heizkanälen ergänzt durch eine gesteuerte Brennstoffzufuhr der Brennereinrichtungen 19 ein vorgegebener Temperatur-Zeitverlauf einstellt.

Wie sich weiterhin aus der Zeichnungsfigur ergibt, ist die in der Abkühlzone 15 angeordnete Absaugeinrichtung 21 an eine Entnahmeleitung 26 angeschlossen, die eine direkte Verbindung zwischen der Kühlzone 15 und einer Wärmetauschereinrichtung 27 darstellt, welche im vorliegenden Ausführungsbeispiel zwei Wärmetauschereinheiten 28 und 29 umfasst. Als Folge der in der Zeichnungsfigur dargestellten Reihenschaltung der Wärmetauschereinheiten 28 und 29 ergibt sich für die in Strömungsrichtung vordere Wärmetauschereinheit 28 eine vergleichsweise höhere Temperaturbeaufschlagung als für die nachfolgende Wärmetauschereinheit 29. Bei der in der Zeichnungsfigur dargestellten Anordnung der Absaugeinrichtung 21 oberhalb einer mittleren Ofenkammer 12 der Abkühlzone 15 ist von einer Temperatur der in die Entnahmeleitung 26 eingeleiteten Heißluft von etwa 450 °C auszugehen. Über eine an der Absaugeinrichtung 21 vorgesehene Drosseleinrichtung 41 kann die Lufttemperatur durch Frischluftzufuhr beeinflusst werden.

Verbunden mit der in der Entnahmeleitung 26 geförderten Luftmenge ergibt sich im Normalbetrieb des Anoden-Ringofens 10 in jedem Fall eine ausreichende Wärmeenergie, um etwa ein als Wärmeträgermedium in der Wärmetauschereinheit 28 verwendetes Wärmeträgeröl auf eine ausreichend hohe Temperatur zu erwärmen, um einen durch die Wärmetauschereinheit 28 hindurch geförderten Petrolkoks-Strom auf eine Temperatur von zumindest 150 °C aufzuheizen. Die beim Ausgang aus der Wärmetauschereinheit 28 in der Heißtuftströmung in der Entnahmeleitung 26 verbliebene Wärmeenergie reicht im Regelfall aus, um einen durch die Wärmetauschereinheit 29 hindurch geförderten Wärmeträgerölstrom 31 soweit vorzuwärmen, dass in einem Misch- und Formaggregat 32 die für die Rohanodenherstellung gewünschte Benetzbarkeit des Petrolkoks mit flüssigem Pech realisiert werden kann. Die aus der zweiten Wärmetauschereinheit 29 abgeführte Heißluft kann anschließend über eine Gebläseeinrichtung 33 in die Umgebung abgegeben oder auch zur Temperierung weiterer Wärmeverbraucher, wie beispielsweise zur Beheizung von Räumen, verwendet werden.

Wie weiterhin der Zeichnungsfigur zu entnehmen ist, ist es bei dem dargestellten Ausführungsbeispiel vorgesehen, die Wärmetauschereinheiten 28 und 29 mit Bypass-Leitungen 34, 35 zu versehen, die jeweils mit einer Drosseleinrichtung 36, 37 ausgestattet sind. Hierdurch ist es möglich, den vermittels der aus der Kühlzone 15 stammende Heißluft in die Wärmetauschereinheiten 28, 29 eingebrachten Wärmeeintrag zu steuern. Weiterhin ist stromaufwärts der Wärmetauschereinrichtung 27 eine Drosseleinrichtung 38 vorgesehen, die eine einstellbare Frischluftzufuhr ermöglicht, um beispielsweise die Temperatur der Heißluft in der Entnahmeleitung zu reduzieren oder den Volumenstrom zu erhöhen. Für den Fall, dass die Temperatur der der Wärmetauschereinrichtung 27 zugeführten Heißluft nicht ausreichend sein sollte, ist eine Beheizungseinrichtung 39 stromaufwärts der Wärmetauschereinrichtung 27 vorgesehen.

Um eine möglichst vollständige Nutzung der in der Kühlzone 15 freiwerdende Abwärme zu ermöglichen, ist bei dem in der Zeichnungsfigur dargestellten Ausführungsbeispiel an der stromaufwärts gesehen letzten Ofenkammer 12 als strömungstechnische Abgrenzung gegenüber der anschließenden Ofenkammer 12 eine Absperreinrichtung 40 vorgesehen, die im Zusammenwirken mit der Absaugeinrichtung 21 sicherstellt, dass die gesamte Kühlwärme aus den zwischenliegend angeordneten Ofenkammern 12 abgeführt wird.

## Patentansprüche

1. Verfahren zur Wärmerückgewinnung bei der Herstellung von Anoden in einem Anoden-Ringofen (10), umfassend zumindest eine Ofeneinheit ("Feuer") (11) mit einer Aufheizzone (13), einer Feuerzone (14) und einer Kühlzone (15), mit jeweils einer Mehrzahl von mit Heizkanälen (17) untereinander verbundenen Ofenkammern (12), die als Wärmetauscher ausgebildet sind und zur Aufnahme der Anoden dienen, bei dem zum Betrieb der Aufheizzone vermittels einer ersten Absaugeinrichtung (23) eine erste Teilmenge der in der Kühlzone durch die Abwärme der Anoden gebildeten Heißluft in die Aufheizzone geleitet wird und vermittels einer zweiten Absaugeinrichtung (21) eine zweite Teilmenge der in der Kühlzone gebildeten Heißluft zu einem vom Anoden-Ringofen unabhängig ausgebildeten weiteren Wärmetauscher (27) geleitet wird,
**dadurch gekennzeichnet,**
**dass** die Aufheizung des zum Betrieb des Wärmetauschers (27) dienenden Wärmeträgermediums über die der Kühlzone entnommene Heißluft erfolgt.

2. Verfahren nach Anspruch 1,
**dadurch gekennzeichnet,**
**dass** die Positionierung der zweiten Absaugeinrichtung (21) in der Kühlzone (15) in Abhängigkeit von der für den weiteren Wärmetauscher (27) benötigten Temperatur erfolgt.

3. Verfahrens nach Anspruch 1 oder 2,
**dadurch gekennzeichnet,**
**dass** in Abhängigkeit von der für den weiteren Wärmetauscher (27) benötigten Temperatur eine Aufteilung der der Kühlzone (15) entnommenen zweiten Teilmenge in eine in den Wärmetauscher (27) eingebrachte Wärmetauscherströmung und eine am Wärmetauscher vorbeigeleitete Bypass-Strömung erfolgt.

4. Verfahren nach Anspruch 3,
**dadurch gekennzeichnet,**
**dass** die aus dem Wärmetauscher (28) abgeführte Wärmeströmung und/oder die Bypass-Strömung einem oder mehreren weiteren Wärmetauschern (29) zugeführt wird.

5. Verfahren nach einem der vorangehenden Ansprüche,
**dadurch gekennzeichnet,**
**dass** die der Kühlzone (15) entnommene zweite Teilmenge mit Umgebungsluft versetzt wird.

6. Verfahren nach einem der vorangehenden Ansprüche,
**dadurch gekennzeichnet,**
**dass** die der Kühlzone (15) entnommene zweite Teilmenge vor dem Eintritt in den Wärmetauscher (27) vermittels einer Beheizungseinrichtung (39) aufgeheizt wird.

7. Verfahren nach einem der vorangehenden Ansprüche,
**dadurch gekennzeichnet,**
**dass** die aus der Aufheizzone (13), der Feuerzone (14) und der Kühlzone (15) zusammengesetzte Ofeneinheit ("Feuer") (11) strömungstechnisch abgeschlossen gegenüber weiteren Ofeneinheiten betrieben wird.

8. Verfahren nach einem der vorangehenden Ansprüche,
**dadurch gekennzeichnet,**
**dass** die durch die Absaugeinrichtung (21, 23) der Kühlzone (15) entnommene Teilmenge für jeden Heizkanal (17) individuell einstellbar ist.

9. Verfahren nach einem der vorangehenden Ansprüche,
**dadurch gekennzeichnet,**
**dass** der Kühlzone (15) durch eine Gebläseeinrichtung (22) eine Luftmenge zugefördert wird, deren Verteilung auf die Heizkanäle (17) individuell einstellbar ist.

10. Vorrichtung zur Wärmerückgewinnung bei der Herstellung von Anoden umfassend zumindest eine Ofeneinheit ("Feuer") (11) eines Anoden-Ringofens (10) mit einer Aufheizzone (13), einer Feuerzone (14) und einer Kühlzone (15), die jeweils eine Mehrzahl von mit Heizkanälen (17) untereinander verbundene Ofenkammern (12) aufweisen, die als Wärmetauscher ausgeführt sind und zur Aufnahme der Anoden dienen, mit einer in der Aufheizzone angeordneten ersten Absaugeinrichtung (23) und einer in der Kühlzone angeordneten zweiten Absaugeinrichtung (21),
**dadurch gekennzeichnet,**
**dass** die zweite Absaugeinrichtung (21) über eine Entnahmeleitung (26) mit einem unabhängig vom Anoden-Ringofen ausgebildeten weiteren Wärmetauscher (27) unmittelbar verbunden ist, derart dass dem Wärmetauscher (27) Wärmeenergie zugeführt wird, die ausschließlich aus der Kühlzone des Anoden-Ringofens stammt.

11. Vorrichtung nach Anspruch 10,
**dadurch gekennzeichnet,**
**dass** die Absaugeinrichtung (21) mit verschiedenen Ofenkammern (12) der Kühlzone (15) verbindbar ist.

12. Vorrichtung nach Anspruch 10 oder 11,
**dadurch gekennzeichnet,**
**dass** der Wärmetauscher (27) mit einer Bypass-Leitung (34, 35) versehen ist.

13. Vorrichtung nach einem der Ansprüche 10 bis 12,
**dadurch gekennzeichnet,**
**dass** der Wärmetauscher (27) mehrere untereinander verbundene Wärmetauschereinheiten (28, 29) aufweist.

14. Vorrichtung nach Anspruch 13,
**dadurch gekennzeichnet,**
**dass** die Wärmetauschereinheiten (28, 29) zumindest teilweise mit einer Bypass-Leitung (34, 35) versehen sind.

15. Vorrichtung nach einem der Ansprüche 10 bis 14,
**dadurch gekennzeichnet,**
**dass** die Absaugeinrichtung (21) oder die Entnahmeleitung (26) mit einer einstellbaren Zulufteinrichtung versehen ist.

16. Vorrichtung nach einem der Ansprüche 10 bis 15,
**dadurch gekennzeichnet,**
**dass** die Entnahmeleitung (26) mit einer Beheizungseinrichtung (39) versehen ist.

17. Vorrichtung nach einem der Ansprüche 10 bis 16,
**dadurch gekennzeichnet,**
**dass** die aus der Aufheizzone (13), der Feuerzone (14) und der Kühlzone (15) zusammengesetzte Ofeneinheit (11) durch eine Absperreinrichtung (40) strömungstechnisch von einer weiteren Ofeneinheit getrennt ist.

18. Vorrichtung nach einem der Ansprüche 10 bis 17,
**dadurch gekennzeichnet,**
**dass** die Absaugeinrichtung (21) eine Mehrzahl von jeweils einem der Mehrzahl von Heizkanälen (17) zugeordneten Drosseleinrichtungen aufweist.

19. Vorrichtung nach einem der Ansprüche 10 bis 17,
**dadurch gekennzeichnet,**
**dass** der Kühlzone (15) eine Gebläseeinrichtung (22) zugeordnet ist, die mit einer Mehrzahl den Heizkanälen (17) jeweils zugeordneten Drosseleinrichtungen versehen ist.

20. Vorrichtung nach einem der Ansprüche 10 bis 19,
**dadurch gekennzeichnet,**
**dass** die Absaugeinrichtung (21) eine Mehrzahl von jeweils einem der Mehrzahl von Heizkanälen (17) zugeordneten Ventilatoren aufweist.

## Claims

1. A method for heat recovery in the production of anodes in an annular anode furnace (10), comprising at least one furnace unit ("hearth") (11) with a heating-up zone (13), a hearth zone (14) and a cooling zone (15), with in each case a plurality of furnace chambers (12) which are interconnected by heating ducts (17), are configured as heat exchangers and serve for receiving the anodes, in which method, for operating the heating-up zone, a first partial amount of hot air produced in the cooling zone by the waste heat of the anodes is directed into the heating-up zone by means of a first suction device (23), and a second partial amount of the hot air produced in the cooling zone is directed by means of a second suction device (21) to a further heat exchanger (27) configured independently of the annular anode furnace,
**characterized in**
**that** heating up the heat transfer medium that serves for operating the heat exchanger (27) takes place by means of the hot air removed from the cooling zone.

2. The method according to claim 1,
**characterized in**
**that** positioning the second suction device (21) in the cooling zone (15) is carried out in dependence on the temperature required for the additional heat exchanger (27).

3. The method according to claim 1 or claim 2
**characterized in**
**that** in dependence on the temperature required for the additional heat exchanger (27), the second partial amount removed from the cooling zone (15) is divided into a heat exchanger flow introduced into the heat exchanger (27) and a bypass flow conveyed past the heat exchanger.

4. The method according to claim 3,
**characterized in**
**that** the heat flow discharged from the heat exchanger (28) and/or the bypass flow are/is conveyed to one or a plurality of additional heat exchangers (29).

5. The method according to any one of the preceding claims,
**characterized in**
**that** the second partial amount removed from the cooling zone (15) is mixed with ambient air.

6. The method according to any one of the preceding claims,
**characterized in**
**that** the second partial amount removed from the cooling zone (15) is heated up by means of a heating device (39) prior to the introduction into the heat exchanger (27).

7. The method according to any one of the preceding claims,
**characterized in**
**that** the furnace unit ("hearth") (11) composed of the heating-up zone (13), the hearth zone (14) and the cooling zone (15) is operated fluidically sealed with respect to further furnace units.

8. The method according to any one of the preceding claims,
**characterized in**
**that** the partial amount removed from the cooling zone (15) by means of the suction device (21, 23) can be individually adjusted for each heating duct (17).

9. The method according to any one of the preceding claims,
**characterized in**
**that** a blower device (22) supplies the cooling zone (15) with an amount of air, the distribution of which over the heating ducts (17) can be individually adjusted.

10. A device for heat recovery in the production of anodes, comprising at least one furnace unit ("hearth") (11) of an annular furnace (10), said at least one furnace unit including a heating-up zone (13), a hearth zone (14) and a cooling zone (15), which in each case have a plurality of furnace chambers (12) which are interconnected by heating ducts (17), are configured as heat exchangers and serve for receiving the anodes, and further including a first suction device (23) arranged in the heating-up zone and a second suction device (21) arranged in the cooling zone,
**characterized in**
**that** the second suction device (21) is directly connected via a discharge line (26) to a further heat exchanger (27) that is configured independently of the annular anode furnace in such a manner that the heat exchanger (27) is supplied with heat energy which comes exclusively from the cooling zone of the annular anode furnace.

11. The device according to claim 10
**characterized in**
**that** the suction device (21) can be connected to different furnace chambers (12) of the cooling zone (15) .

12. The device according to claim 10 or claim 11,
**characterized in**
**that** the heat exchanger (27) is provided with a bypass line (34, 35).

13. The device according to any one of the claims 10 to 12,
**characterized in**
**that** the heat exchanger (27) has a plurality of interconnected heat exchanger units (28, 29).

14. The device according to claim 13,
**characterized in**
**that** the heat exchanger units (28, 29) are at least partially provided with a bypass line (34, 35).

15. The device according to any one of the claims 10 to 14,
**characterized in**
**that** the suction device (21) or the discharge line (26) is provided with an adjustable fresh air device.

16. The device according to any one of the claims 10 to 15,
**characterized in**
**that** the discharge line (26) is provided with a heating device (39).

17. The device according to any one of the claims 10 to 16,
**characterized in**
**that** the furnace unit (11) composed of the heating-up zone (13), the hearth zone (14) and the cooling zone (15) is fluidically separated from a further furnace unit by means of a shut-off device (40).

18. The device according to any one of the claims 10 to 17,
**characterized in**
**that** the suction device (21) has a plurality of throttle devices which are each allocated to one of the plurality of heating ducts (17).

19. The device according to any one of the claims 10 to 7,
**characterized in**
**that** a blower device (22) is allocated to the cooling zone (15) and provided with a plurality of throttle devices which are each allocated to the heating ducts (17) .

20. The device according to any one of the claims 10 to 19,
**characterized in**
**that** the suction device (21) has a plurality of fans which are in each case allocated to one of the plurality of heating ducts (17).

## Revendications

1. Procédé pour la récupération de chaleur lors de la fabrication d'anodes dans un four annulaire à anodes (10), comprenant au moins une unité de four ("feu") (11) avec une zone de réchauffement (13), une zone de feu (14) et une zone de refroidissement (15), comprenant à chaque fois une pluralité de chambres de four (12) reliées entre elles avec des canaux de chauffage (17), lesquelles chambres sont conçues sous forme d'échangeurs de chaleur et servent au logement des anodes, procédé dans lequel, pour l'exploitation de la zone de réchauffement, une première quantité partielle de l'air chaud, formé dans la zone de refroidissement par la chaleur prélevée des anodes, est acheminée dans la zone de réchauffement au moyen d'un premier dispositif d'aspiration (23) et une seconde quantité partielle de l'air chaud, formé dans la zone de refroidissement, est acheminée à un autre échangeur de chaleur (27) réalisé indépendamment du four annulaire à anodes, au moyen d'un second dispositif d'aspiration (21),
**caractérisé en ce que**
le réchauffement de l'agent caloporteur servant au fonctionnement de l'échangeur (27) s'effectue au moyen de l'air chaud prélevé sur la zone de refroidissement.

2. Procédé selon la revendication 1,
**caractérisé en ce que**
le positionnement du second dispositif d'aspiration (21) dans la zone de refroidissement (15) s'effectue en fonction de la température utilisée pour l'autre échangeur de chaleur (27).

3. Procédé selon la revendication 1 ou 2,
**caractérisé en ce**
**qu'**une division de la seconde quantité partielle prélevée sur la zone de refroidissement (15) en un écoulement d'échangeur de chaleur introduit dans l'échangeur de chaleur (27) et un écoulement de dérivation acheminé en passant devant l'échangeur de chaleur s'effectue en fonction de la température utilisée pour l'autre échangeur de chaleur (27).

4. Procédé selon la revendication 3,
**caractérisé en ce que**
l'écoulement de chaleur évacuée de l'échangeur de chaleur (28) et/ou l'écoulement de la dérivation est amené à un ou plusieurs autres échangeurs de chaleur (29) .

5. Procédé selon l'une des revendications précédentes,
**caractérisé en ce que**
la seconde quantité partielle prélevée sur la zone de refroidissement (15) est mélangée avec de l'air ambiant.

6. Procédé selon l'une des revendications précédentes,
**caractérisé en ce que**
la seconde quantité partielle prélevée sur la zone de refroidissement (15) est réchauffée avant l'entrée dans l'échangeur de chaleur (27) au moyen d'un dispositif de chauffage (39).

7. Procédé selon l'une des revendications précédentes,
**caractérisé en ce que**
l'unité de four ("feu") (11) constituée de la zone de réchauffement (13), de la zone de feu (14) et de la zone de refroidissement (15) est utilisée de façon fermée au niveau de l'écoulement par rapport à d'autres unités de four.

8. Procédé selon l'une des revendications précédentes,
**caractérisé en ce que**
la quantité partielle, prélevée par le dispositif d'aspiration (21, 23) de la zone de refroidissement (15), est réglable individuellement pour chaque canal de chauffage (17).

9. Procédé selon l'une des revendications précédentes,
**caractérisé en ce**
**qu'**une quantité d'air, dont la répartition est réglable individuellement entre les canaux de chauffage (17), est amenée à la zone de refroidissement (15) par un dispositif de soufflerie (22).

10. Dispositif pour le recyclage de chaleur lors de la fabrication d'anodes comprenant au moins une unité de four ("feu") (11) d'un four annulaire à anodes (10) présentant une zone de réchauffement (13), une zone de feu (14) et une zone de refroidissement (15), qui présentent chacune une pluralité de chambres de four (12) reliées entre elles avec des canaux de chauffage (17), lesquelles chambres sont conçues sous forme d'échangeurs de chaleur et servent au logement des anodes, avec un premier dispositif d'aspiration (23) disposé dans la zone de réchauffement et un second dispositif d'aspiration (21) disposé dans la zone de refroidissement,
**caractérisé en ce que**
le second dispositif d'aspiration (21) est relié directement par une conduite de prélèvement (26) à un autre échangeur de chaleur (27) conçu indépendamment du four annulaire à anodes, de telle sorte que de l'énergie de chaleur est amenée à l'échangeur de chaleur (27), laquelle énergie provient uniquement de la zone de refroidissement du four annulaire à anodes.

11. Dispositif selon la revendication 10,
**caractérisé en ce que**
le dispositif d'aspiration (21) peut être relié à différentes chambres de four (12) de la zone de refroidissement (15).

12. Dispositif selon la revendication 10 ou 11,
**caractérisé en ce que**
l'échangeur de chaleur (27) est doté d'une conduite de dérivation (34, 35).

13. Dispositif selon l'une des revendications 10 à 12,
**caractérisé en ce que**
l'échangeur de chaleur (27) présente plusieurs unités d'échangeur de chaleur (28, 29) reliées entre elles.

14. Dispositif selon la revendication 13,
**caractérisé en ce que**
les unités d'échangeur de chaleur (28, 29) sont dotées au moins en partie d'une conduite de dérivation (34, 35) .

15. Dispositif selon l'une des revendications 10 à 14,
**caractérisé en ce que**
le dispositif d'aspiration (21) ou la conduite de prélèvement (26) est doté d'un dispositif réglable d'arrivée d'air.

16. Dispositif selon l'une des revendications 10 à 15,
**caractérisé en ce que**
la conduite de prélèvement (26) est dotée d'un dispositif de chauffage (39).

17. Dispositif selon l'une des revendications 10 à 16,
**caractérisé en ce que**
l'unité de four (11) constituée de la zone de réchauffement (13), de la zone de feu (14) et de la zone de refroidissement (15) est séparée par un dispositif d'arrêt (40) au niveau de l'écoulement d'une autre unité de four.

18. Dispositif selon l'une des revendications 10 à 17,
**caractérisé en ce que**
le dispositif d'aspiration (21) présente une pluralité de dispositifs d'étranglement attribués respectivement à chaque fois à l'un de la pluralité de canaux de chauffage (17).

19. Dispositif selon l'une des revendications 10 à 17,
**caractérisé en ce**
**qu'**un dispositif de soufflerie (22), qui est doté d'une pluralité de dispositifs d'étranglement respectivement attribués aux canaux de chauffage (17),
est attribué à la zone de refroidissement (15).

20. Dispositif selon l'une des revendications 10 à 19,
**caractérisé en ce que**
le dispositif d'aspiration (21) présente une pluralité de ventilateurs attribués respectivement à l'un de la pluralité de canaux de chauffage (17).
